(19) Europäisches Patentamt
European Patent Office
Office européen des brevets

(11) EP 0 426 638 B2

(12) NEW EUROPEAN PATENT SPECIFICATION

(45) Date of publication and mention of the opposition decision:
**02.03.2005 Bulletin 2005/09**

(45) Mention of the grant of the patent:
**24.04.1996 Bulletin 1996/17**

(21) Application number: **90870175.8**

(22) Date of filing: **09.10.1990**

(51) Int Cl.[7]: **C08F 4/602**, C08F 10/00

# (54) Addition of aluminium alkyl for improved metallocene catalyst

Addition von Alkylaluminium zum Verbessern eines Metallocenkatalysators

Addition d'alkylaluminium pour un catalyseur métallocène amélioré

(84) Designated Contracting States:
**AT BE CH DE DK ES FR GB GR IT LI LU NL SE**

(30) Priority: **30.10.1989 US 419222**

(43) Date of publication of application:
**08.05.1991 Bulletin 1991/19**

(73) Proprietor: **FINA TECHNOLOGY, INC.**
**Houston, Texas 77267-4412 (US)**

(72) Inventors:
- **Ewen, John A.**
  **Houston, Texas 77058 (US)**
- **Elder, Michael J.**
  **Friendswood, Texas 77546 (US)**

(74) Representative: **Leyder, Francis et al**
**Total Petrochemicals Research Feluy**
**Zone Industrielle C**
**7181 Seneffe (Feluy) (BE)**

(56) References cited:
**EP-A- 0 206 794**
**EP-A- 0 277 004**
**US-A- 3 709 853**

- **JOURNAL OF POLYMER SCIENCE/PART A: POLYMER CHEMISTRY, vol. 26, no. 11, October 1988, pages 3089-3102, New York, NY, US; J.C.W. CHIEN et al.: "Metallocene-methylaluminoxane catalysts for olefin polymerization. I. Trimethylaluminum as coactivator"**



Printed by Jouve, 75001 PARIS (FR)

## Description

FIELD OF THE INVENTION:

This invention relates, in general, to an improved catalyst system and, specifically, to an improved metallocene catalyst system for polymerisation of olefins by addition of an aluminum alkyl and a process for using such a catalyst.

DESCRIPTION OF RELATED ART:

Olefins, especially propylene, may be polymerised to form polyolefins in various forms: isotactic, syndiotactic and atactic. Isotactic polypropylene contains principally repeating units with identical configurations and only a few erratic, brief inversions in the chain. Isotactic polypropylene may be structurally represented as

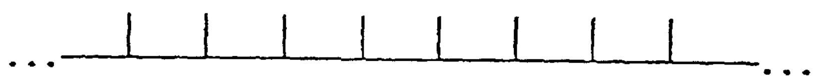

Isotactic polypropylene is capable of being a highly crystalline polymer with a crystalline melting point and other desirable physical properties that are considerably different from the polymer in an amorphous (noncrystalline) state.

A syndiotactic polymer contains principally units of exactly alternating stereo isomers and is represented by the structure:

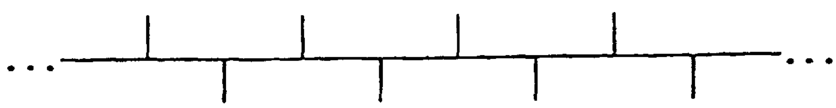

A polymer chain showing no regular order of repeating unit configurations is an atactic polymer. In commercial applications, a certain percentage of atactic polymer is typically produced with the isotactic form.

Polymerization of olefins is primarily with Zeigler-Natta catalysts. One family of Ziegler-Natta catalysts is Group IV metallocene compounds with methylaluminoxane as a cocatalyst. It has been demonstrated that a Ziegler-Natta catalyst for olefin polymerization can be formed by combining a Group IV metallocene with an ionic compound.

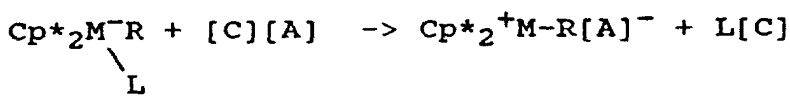

Cp - pentamethylcyclopentadienyl
M - Group IV metal
R - alkyl
L - ligand
[C] - cation
[A] - anion

The resulting compound is a metallocene cation which acts as catalyst. The cation [C] of the ionic compound reacts with the metallocene to generate an ion pair. The anion, [A], is not coordinated or is only loosely coordinated with the cationic metallocene.

The following methods have been used to produce the above reaction:

One-Electron Oxidation - This method is illustrated in "Ethylene Polymerisation by a Cationic Dicyclopentadienylzirconium(IV) Alkyl Complex", R.F. Jordan, c.S.Bajgur, R. Willett, B. Scott, J. Am. Chem. Soc., p. 7410-7411, Vol. 108 (1986). These early examples used a Lewis base to make the metal cation less electrophilic and [BPh4]-was the anion where Ph is $C_6H_5$. The reaction occurred in a solvent which was coordinated with the cation. These materials were usually of low activity.

Protonation - This method is illustrated by "Synthesis and Insertion Reactions of Cationic Alkylbis(cyclopentadienyl) titanium Complexes", M. Bochmann, L.M.Wilson, J. Chem. Soc. Commun., p. 1610-1611, (1986); Cationic Alkylbis (cyclopentadienyl)titanium Complexes", M. Bochmann, L. Wilson, Organometallics, p. 2556-2563, Vol. 6, (1987); Insertion Reactions of Nitriles in Cationic Alkylbis(cyclopentadienyl)titanium Complexes, M. Bochmann, L. Wilson, Organometallics, p. 1147-1154, Vol. 7 (1987).

European Patent Application 0-277-003 relates to work by Turner on a catalyst prepared by a protonation method. A bis(cyclopentadienyl) metal compound is combined with a compound having a cation capable of donating a proton and an anion having a plurality of boron atoms. For example, the following reaction illustrates the invention:

bis(cyclopentadienyl)hafnium dimethyl + N,N-dimethylanilinium

bis(7 8-dicarbaundecaborato) cobaltate(III) →

$[Cp_2HfMe][B] + CH_4$ + N,N-dimethylaniline

where [B] is 7,8-dicarbaundecaborane.

European Patent Application 0-277-004 also relates to work by Turner on a catalyst prepared by a protonation method. A bis(cyclopentadienyl) metal compound is combined with an ionic compound having a cation which will irreversibly react with a ligand on the metal compound and an anion having a plurality of lipophilic radicals around a metal or metalloid ion. For example, the following reaction illustrates the invention:

tri(n-butyl)ammonium tetra(pentafluorophenyl) boron +

bis(cyclopentadienyl) zirconium dimethyl → $[Cp_2ZrMe]$ $[BPh_4]$

+ $CH_4$ + tri(n-butyl)N

A by-product of the protonation reaction is a Lewis base (amine) some of which can coordinate to the cations and thus inhibit catalyst activity. Starting materials must be chosen carefully to avoid generating particular amines which are catalyst poisons.

Carbonium Ion Chemistry - This method is illustrated by "Multiple Metal-Carbon Bonds". R R. Schrock. P R Sharp. J. Am. Chem Soc. p.2389-2399, Vol. 100. No, 8 (April, 2, 1978). A problem with both the carbonium ion chemistry method and the protonation method is that they are poisoned by basic impurities found in olefins and solvents, often resulting in runaway reactions. The high reaction temperature (over 100° C) and the short duration of the polymerisation results in short chain lengths and low molecular weight.

Metallocene catalysts are sensitive to poisons in the absence of a scavenging agent such as methylaluminoxane. Polymerisation requires high concentrations of the cations and frequently end up as either runaway reactions or yield no polymer at all.

## SUMMARY OF THE INVENTION

Accordingly, it is an object of this invention to provide a process for improving metallocene catalyst activity in polymerisation of olefins.

And, it is an object of this invention to use aluminum alkyl as a scavenging agent for poisons which reduce metallocene catalyst activity.

Also, it is an object of this invention to use aluminum alkyl to improve metallocene catalyst activity of a catalyst made by the carbonium ion chemistry method.

Further, it is an object of this invention to reduce cost of a metallocene catalyst system.

Additionally, it is an object of this invention to eliminate methylaluminoxane (MAO) as a cocatalyst in polymerization of propylene.

As well, it is an object of this invention to produce a metallocene catalyst which effects a controlled polymerization of olefins without a methylaluminoxane cocatalyst.

These and other objects are accomplished by mixing an aluminum alkyl with an olefin, preparing a metallocene catalyst, then mixing the catalyst with the aluminum alkyl-olefin mixture without a methylaluminoxane cocatatyst. The metallocene catalyst is an ion pair formed from a neutral metallocene compound and an ionizing compound

## DESCRIPTION OF THE INVENTION

The invention is for a process of polymerizing olefins without use of a methylaluminoxane cocatalyst and for a catalyst system for use in such a process. An aluminum alkyl is mixed with an olefin and then introduced into the

presence of an ionic metallocene catalyst produced by mixing a neutral metallocene compound with an ionizing agent. Molar ratios for metallocene:ionizing compound:aluminum alkyl range from 0.5:1:0.5 to 5:1:350 and are preferably from 0.625:1:1.5 to 1.5:1:77 and are most preferably 1:1:1.

In one example of a new synthesis procedure for a metallocene catalyst, an ionizing ionic compound, such as triphenylcarbenium tetrakis(pentafluorophenyl)borate, is mixed with a neutral methyl derivatives of metallocene of the general formula $Cp_2MR_p$ to produce the following reaction:

$$Cp_2MR_p + [C^*][A^*] \rightarrow [Cp_2MR_{p-1}]^+[A^*]^- + R[C^*]$$

where Cp is cyclopentadienyl or substituted cyclopentadienyl. M is titanium, zirconium or hafnium, R is a hydrocarbyl radical, p is 1 to 4. C* is a carbonium, oxonium or sulfonium cation, A* is an anion which is not coordinated or is only loosely coordinated to the cation of the metallocene and [C*][A*] is an ionizing agent which does not contain an active proton. Each Cp can be the same or different. Each R can be the same or different. R is preferably an alkyl, aryl, alkenyl, alkylaryl, or arylalkyl radical of up to 20 carbon atoms and is most preferably methyl. $Cp_2MR_p$ is preferably ethylene bis(tetrahydroindenyl)zirconium dimethyl, ethylene bis(indenyl)hafnium dimethyl, ethylene is(indenyl)zirconium dimethyl or isopropylidene (cyclopentadienyl-1-fluorenyl)zirconium dimethyl and most preferably ethylenebis(indenyl)zirconium dimethyl. Each reactant is placed in a solvent which is not coordinated or is only loosely coordinated with the metallocene cation, such as methylene chloride or toluene. The preferred solvent is toluene.

The two reactants dissolved separately in the same solvents are mixed together at room temperature. The ionizing compound ionizes the metallocene and an ion pair is formed in which the metallocene cation acts as a catalyst. After mixing, the mixture is added to an olefin under conditions to effect polymerization. The olefin is preferably propylene. This procedure is covered by European Patent Application No. 90870174.1 which is hereby incorporated by reference into this application.

In another example of a synthesis procedure for a catalyst, a neutral derivative of a metallocene, such as a cyclopentadienyl metal compound, is combined with a tetraphenylborate metal compound. The neutral metallocene compound is of the general formula $Cp_2MR''_2$, where Cp is cyclopentadienyl or substituted cyclopentadienyl, M is titanium, zirconium or hafnium and R" is an alkyl. An $R^-$ is abstracted from the metallocene by the metal of the tetraphenylborate metal compound, resulting in an ion pair of the general formula $[Cp_2MR'']^+$ $[BPh_4]^-$ where $BPh_4$ is a tetraphenyl borate anion.

An aluminum alkyl is mixed with an olefin and brought to reaction temperature. The aluminum alkyl is of the general formula $AlR_3$ where R is a halogen, oxygen, hydride, alkylalkoxy or aryl, each R being the same or different and at least one R is a alkyl. The aluminum alkyl is preferably trimethylaluminum (TMA) or triethylaluminum (TEA1) and is most preferably triethylaluminum. The olefin is any of the olefins but is preferably propylene or ethylene and is most preferably propylene. The mixture of aluminum alkyl and olefin is brought in contact with a metallocene catalyst. The catalyst may be made by any known method, including but not limited to those described above.

The catalyst system is an ionic metallocene catalyst of the general formula:

$$[Cp_2MR^{\#}_{p-1}]^+[A]^-$$

wherein $[Cp_2MR^{\#}_{p-1}]^+$ is a metallocene cation wherein Cp is cyclopentadienyl or substituted cyclopentadienyl, each Cp being the same or different, R# is a hydrocarbyl radical, each R# being the same or different, p is from 1 to 4 and $[A]^-$ is an anion. R# is preferably a hydrocarbyl radical, such as an alkyl, an aryl, an alkenyl, an alkylaryl or an arylalkyl having up to 20 carbon atoms and is most preferably an alkyl or alkoxy of up to six carbon atoms or an aryl of up to 10 carbon atoms. M is titanium, zirconium and hafnium and is most preferably zirconium or hafnium. The metallocene cation is preferably a cation of ethylenebis(tetrahydroindenyl)zirconium dimethyl, ethylenebis(indenyl)zirconium dimethyl, ethylenebis(indenyl)hafnium dimethyl and isopropylidene (cyclopentadienyl-1-fluorenyl)zirconium dimethyl and is most preferably ethylenebis(tetrahydroindenyl)zirconium dimethyl. The anion is preferably tetrakis(pentafluorophenyl) borato. The aluminum is as described above and is most preferably TMA or TEA1 and is most preferably TEA1.

The following metallocene-ionizing agent systems were evaluated with and without addition of an aluminum alkyl:

1. $Et(Ind)_2ZrMe_2/[Ph_3C][BPh^*_4]$
2. $Et(Ind)_2HfMe_2/[Ph_3C][BPh^*_4]$
3. $Et(Ind)_2ZrMe_2/[Me_2PhN][BPh^*_4]$ (outside the claimed invention)
4. $iPr(Cp^{-1}\text{-}Flu)ZrMe_2/[Ph_3C][BPh^*_4]$
5. $Et(H_4Ind)_2ZrMe_2/[Ph_3C][BPh^*_4]$

6. $Et(H_4Ind)_2ZrMe_2/[Me_2PhN][BPh^*_4]$ (outside the claimed invention)

$Et(Ind)_2ZrMe_2$ is ethylene bis(indenyl)zirconium dimethyl, iPr(Cp-1-Flu)$ZrMe_2$ is isopropylidene (cyclopentadienyl-1-fluorenyl)zirconium dimethyl, $Et(H_4Ind)_2ZrMe_2$ is ethylene bis(tetrahydroindenyl)zirconium dimethyll $[Ph_3C]$ $[BPh^*_4]$ is triphenylcarbenium tetrakis(pentafluorophenyl)boronate, $(Me_2PhN][BPh^*_4]$ is N,N-dimethylanilinium tetrakis(pentafluorphenyl)boronate.

The invention having been generally described, the following examples are given as particular embodiments of the invention and to demonstrate the practice and advantages thereof. It is understood that the examples are given by way of illustration and are not intended to limit the specification or the claims to follow in any manner.

GROUP 1:

EXAMPLE I

100 mg of triphenylcarbenium tetrakis(pentafluorophenyl) boronate was dissolved in 10 ml of toluene. 60 mg of $Et(Ind)_2ZrMe_2$ was dissolved in 10 ml of toluene. The two solutions were mixed together for 5 minutes at room temperature.

Reactor temperature was set to 50°C and one liter of propylene was pumped into the reactor. The catalyst mixture was added to a 40 ml stainless steel bomb equipped with ball valves on each end. 400 ml of propylene was pumped through the bomb into the reactor. The reactor temperature remained at 50°C and the contents of the reactor were agitated for sixty minutes. At the end of the polymerization, the reactor is cooled and the unreacted propylene was vented from the reactor.

The reaction product was dried under vacuum at approximately 40°C for 12 hours. The polymer was then weighed and analysed for melting point. The melting point was derived from differential scanning calorimetry (DSC). The results are shown in Table I.

EXAMPLE II

The procedure of Example 1 was repeated with the contents of the reactor being agitated for 30 minutes. The results are shown in Table I.

EXAMPLE III

The procedure of Example 1 was repeated with the contents of the reactor set point temperature being set at 70°C. The results are shown in Table I.

EXAMPLE IV

0.32 mmol of trimethylaluminum (TMA) was dissolved in 5 ml of toluene and was added to a 2 liter Zipperclave reactor under 5 psig of nitrogen. Reactor temperature was set to 70°C and one liter of propylene was pumped into the reactor. The mixture was stirred for ten minutes at 1200 rpm.

100 mg of triphenylcarbenium tetrakis(pentafluorophenyl) boronate was dissolved in 10 ml of toluene. 60 mg of $Et(Ind)_2ZrMe_2$ was dissolved in 10 ml of toluene. The two solutions were mixed together for 5 minutes at room temperature.

The catalyst mixture was added to a 40 ml stainless steel bomb equipped with ball valves on each end. 400 ml of propylene was pumped through the bomb into the reactor. The reactor temperature remained at 70°C and the contents of the reactor were agitated for sixty minutes. At the end of the polymerization, the reactor is cooled and the unreacted propylene was vented from the reactor.

The reaction product was dried under vacuum at approximately 40°C for 12 hours. The polymer was then weighed and analyzed for melting point. The melting point was derived from differential scanning calorimetry (DSC). The results are shown in Table I.

EXAMPLE V

The procedure of Example II was repeated using 0.33 mmol of triethylalumium (TEA1) and agitating the contents of the reactor for 10 minutes. The results are shown in Table I.

EXAMPLE VI

The procedure of Example II was repeated using 0.33 mmol of triethylaluminum (TEA1), 50 mg of triphenylcarbenium tetrakis(pentafluorophenyl) boronate and 30 mg of $Et(Ind)_2ZrMe_2$. The contents of the reactor were agitated for 5 minutes. The results are shown in Table I.

EXAMPLE VII

The procedure of Example II was repeated using 0.33 mmol of triethylaluminum (TEA1), 16 mg of triphenylcarbenium tetrakis(pentafluorophenyl)boronate and 10 mg of $Et(Ind)_2ZrMe_2$. The contents of the reactor were agitated for ten minutes. The results are shown in Table I.

EXAMPLE VIII

The procedure of Example II was repeated using 0.66 mmol of triethylalumium (TEA1), 8 mg of triphenylcarbenium tetrakis(pentafluorophenyl)boronate and 2.5 mg of $Et(Ind)_2ZrMe_2$. The contents of the reactor were agitated for sixty minutes. The results are shown in Table I.

EXAMPLE IX

The procedure of Example II was repeated using 0.66 mmol of triethylaluminum (TEA1), 8 mg of triphenylcarbenium tetrakis(pentafluorophenyl)boronate and 1.25 mg of $Et(Ind)_2ZrMe_2$. The contents of the reactor were agitated for sixty minutes. The results are shown in Table I.

EXAMPLE X

The procedure of Example II was repeated using 0.66 mmol of triethylaluminum (TEA1), 8 mg of triphenylcarbenium tetrakis(pentafluorophenyl)boronate and 2.5 mg of $Et(Ind)_2ZrMe_2$. The contents of the reactor were agitated for thirty minutes. The results are shown in Table I.

EXAMPLE XI

The procedure of Example II was repeated using 0.66 mmol of triethylaluminum (TEA1), 8 mg of triphenylcarbenium tetrakis(pentafluorophenyl)boronate and 2.5 mg of $Et(Ind)_2ZrMe_2$. The contents of the reactor were agitated for forty minutes. The results are shown in Table I.

EXAMPLE XII

The procedure of Example II was repeated using 0.33 mmol of triethylaluminum (TEA1), 8 mg of triphenylcarbenium tetrakis(pentafluorophenyl)boronate and 5 mg of $Ef(Ind)_2ZrMe_2$. The contents of the reactor were agitated for thirty minutes. The results are shown in Table I.

EXAMPLE XIII

The procedure of Example II was repeated with 5 mg of $Et(Ind)_2ZrMe_2$, 8 mg of $[Ph_3C][BPh^*_4]$, 0.66 mmol of triethyl aluminum and a run time of 30 minutes. The results are shown in Table I.

EXAMPLE XIV

The procedure of Example II was repeated with 2.5 mg of $Et(Ind)_2ZrMe_2$, 8 mg of $[Ph_3C][BPh^*_4]$, 0.66 mmol of triethyl aluminum and a run time of 60 minutes. The results are shown in Table I.

EXAMPLE XV

The procedure of Example II was repeated with 2.5 mg of $Et(Ind)_2ZrMe_2$, 4 mg of $[Ph_3C][BPh^*_4]$, 0.66 mmol of TEA1 and a run time of 30 minutes. The results are shown in Table I.

EXAMPLE XVI

The procedure of Example II was repeated with 2.5 mg of $Et(Ind)_2ZrMe_2$, 4 mg of $[Ph_3C][BPh^*_4]$, 0.99 mmol of TEA1 and a run time of 30 minutes. The results are shown in Table I.

EXAMPLE XVII

The procedure of Example II was repeated with 2.5 mg of $Et(Ind)_2ZrMe_2$. 24 mg of $[Ph_3C][BPh^*_4]$ 0.66 mmol of TEA1 and a run time of 30 minutes. The results are shown in Table I.

EXAMPLE XVIII

The procedure of Example II was repeated with 2.5 mg $Et(Ind)_2ZrMe_2$ 24 mg of $[Ph_3C][BPh^*_4]$. 2.00 mmol of TEA1 and a run time of 30 minutes. The results are shown in Table I.

GROUP 2:

EXAMPLE XIX

The procedure of Example II was repeated with 20 mg of $Et(Ind)_2ZrMe_2$, 80 mg of $[Ph_3C][BPh^*_4]$, 0.42 mmol of trimethyl aluminum and a run time of 30 minutes. The results are shown in Table I

GROUP 3: (outside claimed invention)

EXAMPLE XX

The procedure of Example 1 was repeated with 2.5 mg of $Et(Ind)_2ZrMe_2$, 7 mg of $[Me_2PhN][BPh^*_4]$. and a run time of 60 minutes The results are shown in Table I.

EXAMPLE XXI

The procedure of Example II was repeated with 2.5 mg of $Et(Ind)_2ZrMe_{2,}$ 7.0 mg of $[Me_2PhN][BPh^*4]$, 0.66 mmol triethyl aluminum and a run time of 5 minutes. The results are shown in Table I

EXAMPLE XXII

The procedure of Example II was repeated using 0 66 mmol of triethylaluminum (TEA1), 7.0 mg of N, N-dimethylanilinium tetrakis(pentafluorophenyl)boronate and 2.5 mg of $Et(Ind)_2Zrme_2$. The contents of the reactor were agitated for twenty-five minutes. The results are shown in Table I.

EXAMPLE XXIII

The procedure of Example II was repeated using 0.66 mmol of triethylaluminum (TEA1), 3.5 mg of N,N-dimethylanilinium tetrakis(pentafluorophenyl)boronate and 1.25 mg of $Et(Ind)_2ZrMe_2$. The contents of the reactor were agitated for thirty minutes. The results are shown in Table I.

EXAMPLE XXIV

The procedure of Example II was repeated with 1.25 mg of $Et(Ind)_2ZrMe_2$, 3.5 mg of $[Me_2PhN][BPh^*_4]$, 0.66 mmol of triethylaluminum and a run time of 60 minutes. The results are shown in Table I.

EXAMPLE XXV

The procedure of Example II was repeated with 0.625 mg of $Et(Ind)_2ZrMe_2$, 1.75 mg of $[ME_2PhN][BPh^*_4]$ 0.66 mmol of tnethylaluminum and a run time of 60 minutes The results are shown in Table I.

GROUP 4:

EXAMPLE XXVI

The procedure of Example I was repeated with 40 mg of iPr(Cp-1-Flu)$ZrMe_2$, 60 mg of $[Ph_3C][BPh^*_4]$ and a run time of 60 minutes. The results are shown in Table I.

EXAMPLE XXVII

The procedure of Example I was repeated with 60 mg of iPr(Cp-1-Flu)$ZrMe_2$ 100 mg of $[Ph_3C][BPh^*_4]$. and a run time of 60 minutes The results are shown in Table I

EXAMPLE XXVIII

The procedure of Example II was repeated with 60 mg of iPr(Cp-1-Flu)$ZrMe_2$ 100 mg of $[Ph_3C][BPh^*_4]$ 0.16 mmol of trimethylaluminum and a run time of 60 minutes. The results are shown in Table I.

EXAMPLE XXIX

The procedure of Example II was repeated using 0.48 mmol of trimethylaluminum (TMA). 100 mg of $[Ph_3C][BPh^*_4]$ and 60 mg of iPr(Cp-1-flu)$ZrMe_2$, and a run time of 60 minutes. The results are shown in Table I.

EXAMPLE XXX

The procedure of Example II was repeated with 20 mg of iPr(Cp-1-Flu)$ZrMe_2$. 60 mg of $[Ph_3C][BPh^*_4]$ 0.16 mmol of trimethylaluminum and a run time of 60 minutes. The results are shown in Table I.

GROUP 5:

EXAMPLE XXXI

The procedure of Example 1 was repeated with 15 mg of $Et(H_4Ind)_2ZrMe_2$. 30 mg of $[Ph_3C][BPh^*_4]$. and a run time of 60 minutes. The results are shown in Table I.

EXAMPLE XXXII

The procedure of Example 1 was repeated with 20 mg of $Et(H_4Ind)_2ZrMe_2$, 40 mg of $[Ph_3c][BPh^*_4]$, and a run time of 60 minutes. The results are shown in Table I.

EXAMPLE XXXIII

The procedure of Example 1 was repeated with 20 mg of $Et(H_4Ind)_2ZrMe_2$. 40 mg of $[Ph_3C][BPh^*_4]$, and a run time of 5 minutes. The results are shown in Table I.

EXAMPLE XXXIV

The procedure of Example II was repeated with 2.5 mg of $Et(H_4Ind)_2ZrMe_2$ 8 mg of $[Ph_3C][BPh^*_4)$, 0.66 mmol of TEA1 and a run time of 60 minutes. The results are shown in Table I.

GROUP 6: (outside claimed invention)

EXAMPLE XXXV

The procedure of Example 1 was repeated with 50 mg of $Et(H_4Ind)_2ZrMe_2$, 40 mg of $[Me_2PhN][BPh^*_4]$, and a run time of 120 minutes. The results are shown in Table I.

EXAMPLE XXXVI

The procedure of Example II was repeated with 2.5 mg of $Et(H_4Ind)_2ZrMe_2$, 9.2 mg of $[Me_2PhN][BPh^*_4]$ 0.66 mmol of TEA1 and a run time of 60 minutes. The results are shown in Table I.

The following results are from the experimental runs described above using the method of the present invention.

TABLE I

| Run # | Catalyst umol(mg) | Ionizing Agent umol(mg) | Al-alkyl | mmol | Run Time min. |
|---|---|---|---|---|---|
| | $Et(Ind)_2ZrMe_2$ | $[Ph_3C][BPh^*_4]$ | | | |
| 1 | 159(60) | 109(100) | | 0 | 60 |
| 2 | 159(60) | 109(100) | | 0 | 30 |
| 3 | 159(60) | 109(100) | | 0 | 60 |
| 4 | 159(60) | 109(100) | TMA | 0.32 | 60 |
| 5 | 159(60) | 109(100) | TEA1 | 0.33 | 10 |
| 6 | 80(30) | 54(50) | | 0.33 | 5 |
| 7 | 26.5(10) | 17.3(16) | | 0.33 | 10 |
| 8 | 6.63(2.5) | 8.64(8) | | 0.66 | 60 |
| 9 | 3.36(1.25) | 8.64(8) | | 0.66 | 60 |
| 10 | 6.63(2.5) | 8.64(8) | | 0.66 | 30 |
| 11 | 6.63(2.5) | 8.64(8) | | 0.66 | 40 |
| 12 | 13.3(5) | 8.6(8) | | 0.33 | 30 |
| 13 | 13.3(5) | 8.64(8) | | 0.66 | 30 |
| 14 | 6.63(2.5) | 8.64(8) | | 0.66 | 60 |
| 15 | 6.63(2.5) | 4.3(4) | | 0.66 | 30 |
| 16 | 6.63(2.5) | 4.3(4) | | 0.99 | 30 |
| 17 | 6.63(2.5) | 26(24) | | 0.66 | 30 |
| 18 | 6.63(2.5) | 26(24) | | 2.00 | 30 |
| | $Et(Ind)_2HfMe_2$ | $[Ph_3C][BPh^*_4]$ | | | |
| 19 | 53(20) | 85(80) | TMA | 0.42 | 30 |
| | $Et(Ind)_2ZrMe_2$ | $[Me_2PhN][BPh^*_4]$ | | | |
| 20 | 6.6(2.5) | 8.7(7.0) | | 0 | 60 |
| 21 | 6.6(2.5) | 8.7(7.0) | TEA1 | 0.66 | 5 |
| 22 | 6.6(2.5) | 8.7(7.0) | | 0.66 | 25 |
| 23 | 3.3(1.25) | 4.35(3.5) | | 0.66 | 30 |
| 24 | 3.3(1.25) | 4.35(3.5) | | 0.66 | 60 |
| 25 | 1.65(.0625) | 2.175(1.75) | | 0.66 | 60 |
| | $iPr(Cp\text{-}1\text{-}Flu)ZrMe_2$ | $[Ph_3C][BPh^*_4]$ | | | |
| 26 | 102(40) | 65(60) | | 0 | 60 |
| 27 | 154(60) | 109(100) | | 0 | 60 |
| 28 | 154(60) | 109(100) | TMA | 0.16 | 60 |
| 29 | 154(60) | 109(100) | | 0.48 | 60 |
| 30 | 51(20) | 65(60) | | 0.16 | 60 |
| | $Et(H_4Ind)_2ZrMe_2$ | $[Ph_3C][BPh^*_4]$ | | | |
| 31 | 40(15) | 33(30) | | 0 | 60 |
| 32 | 53(20) | 44(40) | | 0 | 60 |
| 33 | 80(30) | 67(60) | | 0 | 5 |
| 34 | 7(2.5) | 8.8(8.0) | TEA1 | 0.66 | 60 |
| | $Et(H_4Ind)_2ZrMe_2$ | $[Me_2PhN][BPh^*_4]$ | | | |
| 35 | 133(50) | 44(40) | | 0 | 120 |
| 36 | 7(2.5) | 10(9.2) | TEA1 | 0.66 | 60 |

| Run # | Polymerization Temp (°C) | Yield (gms) | Melting Temp (°C) |
|---|---|---|---|
| 1 | 50 | 19 | 137 |
| 2 | 50 | 11 | 125 |
| 3 | 70 | 8 | 126 |
| 4 | 70 | 270 | 124 |
| 5 | 70* | 340 | 126 |
| 6 | 70* | 432 | No Melt |
| 7 | 70* | 260 | 118 |
| 8 | 70 | 319 | 129 |
| 9 | 70 | 89 | 132 |
| 10 | 70 | 117 | |
| 11 | 70* | 377 | 131 |
| 12 | 70 | 22 | 132 |
| 13 | 70 | 51 | 131 |
| 14 | 70* | 357 | 127 |
| 15 | 70 | 9 | 132 |
| 16 | 70 | 11 | 134 |
| 17 | 70 | 149 | 131 |
| 18 | 70 | 62 | 130 |
| 19 | 70 | 51 | 131 |
| 20 | 70 | - | - |
| 21 | 70* | 106 | 125 |
| 22 | 70* | 405 | 127 |
| 23 | 70* | 434 | 127 |
| 24 | 70 | 385 | 131 |
| 25 | 70 | 253 | 131 |
| 26 | 80 | 2 | - |
| 27 | 70 | 51 | - |
| 28 | 70* | 284 | 116 |
| 29 | 70* | 268 | 117 |
| 30 | 70* | 156 | 116 |
| 31 | 50 | 2 | 142 |
| 32 | 50 | 35 | 138 |
| 33 | 120 | 70 | 127 |
| 34 | 70 | 154 | 115 |
| 35 | 50 | 50 | 133 |
| 36 | 70 | 116 | 116 |

*Exotherm; reaction temperature increased by more than 10°C.

The process described by this invention synthesizes cations which are used as catalysts in olefin polymerization. The process of making catalysts with this invention produces catalysts having high activity and reduces the by-products which can inhibit catalyst activity. This new synthesis also reduces the catalyst poisons found in the solvents which can inhibit catalyst activity.

The addition of an aluminum alkyl to ionic metallocene catalyst systems was found to result in reproducible, controllable, high efficiency polymerizations. The addition of an alkyl aluminum provides a scavenging agent for catalyst poisons. The quantity of aluminum alkyl added is relatively small and aluminum alkyls are relatively inexpensive. The metallocene cation/aluminum alkyl combination results in a better catalyst system than the cations alone and give consistently high activities.

## Claims

**1.** A process for polymerization of olefins comprising :

a) mixing an aluminum alkyl with an olefin;
b) preparing a metallocene catalyst;
c) mixing the catalyst with the aluminium alkyl-olefin mixture ;

wherein the aluminum alkyl is of the general formula $AlR'_3$ wherein R' is an alkyl of up to six carbon atoms ;

wherein the metallocene catalyst is an ion pair formed from a neutral metallocene compound and an ionizing ionic compound and comprises a metallocene cation and an anion from the ionizing ionic compound;

wherein ionizing ionic compound does not contain an active proton and is of the general formula [C][A], wherein [C] contains a carbonium, oxonium or sulfonium cation and the anion [A] is not coordinated or is only loosely coordinated to the metallocene cation; and

wherein the neutral metallocene is of the general formula

$$Cp_2 M R^*_p$$

wherein Cp is a cyclopentadienyl or a substituted cyclopentadienyl group, each Cp being the same or different, R* is a hydrocarbyl radical, R* being the same or different,

M is titanium, zirconium or hafnium, p is 1 to 4 ;

excluding the process wherein

(i) the aluminium alkyl is trimethylaluminium ; and
(ii) the olefin is propylene; and
(iii) the neutral metallocene compound is isopropylidene (cyclopentadienyl-1-fluorenyl) zirconium dimethyl ; and
(iv) the ionic ionizing compound is triphenylcarbenium tetrakis (pentafluorophenyl) boronate.

**2.** A process as recited in claim1 wherein R* is an alkyl, aryl, alkenyl, alkylaryl, or arylalkyl radical of up to 20 carbon atoms.

**3.** A process as recited in claim 1 wherein the molar ratio for metallocene: ionizing compound: aluminum alkyl ranges from 0.5:1:0.5 to 5:1:350.

**4.** A process as recited in claim 3 wherein the molar ratio for metallocene: ionizing compound: aluminum alkyl ranges from 0.625:1:1.5 to 1.5:1:77.

**5.** A process as recited in claim 4 wherein the molar ratio for metallocene: ionizing compound: aluminum alkyl is 1:1:1.

**6.** A process as recited in claim 1 wherein the aluminum alkyl is selected from the group consisting of triethylaluminum and trimethylaluminum.

**7.** A process as recited in claim 6 wherein the aluminum alkyl is triethylaluminum.

**8.** A process as recited in claim 1 wherein the olefin is propylene.

**9.** A process as recited in claim 1 wherein M is selected from the group consisting of zirconium and hafnium.

**10.** A process as recited in claim 1 wherein the neutral metallocene is chosen from the group consisting of ethylenebis (tetrahydroindenyl) zirconium dimethyl, ethylenebis(indenyl) zirconium dimethyl, ethylenebis(indenyl) hafnium dimethyl, and isopropylidene(cyclopentadienyl-1-fluorenyl) zirconium dimethyl.

**11.** A process as recited in claim 1 wherein the ionic ionizing compound is triphenylcarbenium tetrakis(pentafluorophenyl) boronate.

**12.** A process as recited in claim 1 wherein wherein the catalyst is prepared by the following steps comprising:

a) mixing an ionizing ionic compound with a neutral metallocene; and
b) allowing contact between the ionizing ionic compound and the neutral metallocene to generate an ion pair in which the metallocene cation acts as a catalyst:

wherein the neutral metallocene is of the general formula

$$Cp_2\ M\ R^*_p$$

wherein Cp is a cyclopentadienyl or a substituted cyclopentadienyl group each Cp being the same or different, R* is a hydrocarbyl radical, R* being the same or different, M is titanium, zirconium or hafnium, p is 1 to 4;
wherein ionizing ionic agent does not contain an active proton and contains a carbonium, oxonium or sulfonium cation and
wherein the anion of the ionizing ionic compound is not coordinated or is only loosely coordinated to the metallocene cation and is chemically unreactive with the metallocene cation.

**13.** A catalyst system comprising:

a) a metallocene catalyst, and
b) an aluminum alkyl

wherein the aluminum alkyl is of the general formula $AlR'_3$ wherein R' is an alkyl having up to 6 carbon atoms, wherein the metallocenecatalyst is an ion pair of the general formula:

$$[Cp_2\ M\ R^*_{p-1}]^+\ [A]^-$$

wherein $[Cp_2\ M\ R^*_{p-1}]^+$ is a metallocene cation wherein Cp is a cyclopentadienyl or a substituted cyclopentadienyl group, each Cp being the same or different, R* is a hydrocarbyl radical, R* being the same or different, M is titanium, zirconium or hafnium, p is 1 to 4 ;
wherein the metallocene is an ion pair formed from a neutral metallocene compound and an ionizing ionic compound said ion pair comprising a metallocene cation and an anion from the ionizing compound;
wherein the ionizing ionic compound does not.contain an active proton and is of the formula [C] [A], wherein C contains a carbonium, oxonium or sulfonium cation, and wherein the anion A is not coordinated or is loosely coordinated to the metallocene cation;
excluding the catalyst system wherein

(i) the aluminium alkyl is trimethylaluminium ; and
(ii) the neutral metallocene compound is isopropylidene (cyclopentadienyl-1-fluorenyl) zirconium dimethyl ; and
(iii) the ionic ionizing compound is triphenylcarbenium tetrakis (pentafluorophenyl) boronate.

**14.** A catalyst system as recited in claim 13 wherein R* is an alkyl, aryl, alkenyl, alkylaryl, or arylalkyl radical of up to 20 carbon atoms.

**15.** A catalyst system as recited in claim 13 wherein R* is an alkyl having up to six carbon atoms or an aryl having up to 10 carbon atoms.

**16.** A catalyst system as recited in claim 13 wherein the aluminum alkyl is selected from the group consisting of triethylaluminum and trimethylaluminum.

**17.** A catalyst system as recited in claim 16 wherein the aluminum alkyl is triethylaluminum.

**18.** A catalyst system as recited in claim 13 wherein the neutral metallocene is chosen from the group consisting of ethylenebis(tetrahydroindenyl) zirconium dimethyl, ethylenebis(indenyl) zirconium dimethyl, ethylenebis(indenyl) hafnium dimethyl, and isopropylidene(cyclopentadienyl-1-fluorenyl) zirconium dimethyl.

**19.** A catalyst system as recited in claim 13 wherein the anion is tetrakis(pentafluorophenyl) borato anion.

## Patentansprüche

**1.** Verfahren zur Polymerisation von Olefinen, umfassend :

a) Mischen eines Aluminiumalkyls mit einem Olefin;
b) Herstellen eines Metallocenkatalysators;
c) Mischen des Katalysators mit dem Aluminiumalkyl-Olefingemisch;

wobei das Aluminiumalkyl die allgemeine Formel $AlR'_3$ aufweist, worin R' ein Alkyl von bis zu sechs Kohlenstoffatomen ist;
wobei der Metallocenkatalysator ein Ionenpaar ist, das aus einer neutralen Metallocenverbindung und einer ionisierenden ionischen Verbindung gebildet worden ist und ein Metallocenkation und ein Anion aus der ionisierenden ionischen Verbindung enthält;
wobei die ionisierende ionische Verbindung kein aktives Proton enthält und die allgemeine Formel [C] [A] hat, wobei [C] ein Carbonium-, Oxonium- oder Sulfoniumkation enthält und das Anion [A] mit dem Metallocenkation nicht koordiniert ist oder nur locker koordiniert ist; und
wobei das neutrale Metallocen die allgemeine Formel

$$Cp_2MR^*_p$$

aufweist, wobei Cp eine Cyclopentadienyl- oder eine substituierte Cyclopentadienylgruppe ist, wobei jedes Cp gleich oder verschieden ist, R* ein Kohlenwasserstoffrest ist, wobei R* gleich oder verschieden ist, M Titanium, Zirkonium oder Hafnium ist, p 1 bis 4 ist, ausschließlich des Verfahrens, worin

(i) das Aluminiumalkyl Trimethylaluminium ist; und
(ii) das Olefin Propylen ist; und
(iii) die neutrale Metallocenverbindung Isopropyliden (Cyclopentadienyl-1-fluorenyl)zirkoniumdimethyl ist; und
(iv) die ionische ionisierende Verbindung Triphenylcarbeniumtetrakis(pentafluorphenyl)boronat ist.

**2.** Verfahren gemäß Anspruch 1, wobei R' ein Alkyl-, Aryl-, Alkenyl-, Alkylaryl- oder Arylalkylradikal von bis zu 20 Kohlenstoffatomen ist.

**3.** Verfahren gemäß Anspruch 1, wobei das Molverhältnis für Metallocen : ionisierender Verbindung : Aluminiumalkyl sich von 0,5 : 1 : 0,5 bis auf 5 : 1 : 350 beläuft.

**4.** Verfahren gemäß Anspruch 3, wobei das Molverhältnis für Metallocen : ionisierender Verbindung : Aluminiumalkyl sich von 0,625 : 1 : 1,5 bis auf 1,5 : 1 : 77 beläuft.

**5.** Verfahren gemäß Anspruch 4, wobei das Molverhältnis für Metallocen : ionisierender Verbindung : Aluminiumalkyl 1 : 1 : 1 ist.

**6.** Verfahren gemäß Anspruch 1, wobei das Aluminiumalkyl aus der aus Triethylaluminium und Trimethylaluminium bestehenden Gruppe gewählt ist.

**7.** Verfahren gemäß Anspruch 6, wobei das Aluminiumalkyl Triethylaluminium ist.

**8.** Verfahren gemäß Anspruch 1, wobei das Olefin Propylen ist.

**9.** Verfahren gemäß Anspruch 1, wobei M aus der aus Zirkonium und Hafnium bestehenden Gruppe gewählt ist.

**10.** Verfahren gemäß Anspruch 1, wobei das neutrale Metallocen aus der aus Ethylenbis(tetrahydroindenyl)zirkoniumdimethyl, Ethylenbis(indenyl)zirkoniumdimethyl, Ethylenbis(indenyl)hafniumdimethyl und Isopropyliden(cyclopentadienyl-1-fluorenyl)zirkoniumdimethyl bestehenden Gruppe gewählt ist.

**11.** Verfahren gemäß Anspruch 1, wobei die ionische ionisierende Verbindung Triphenylcarbeniumtetrakis(pentafluorphenyl)boronat ist.

**12.** Verfahren gemäß Anspruch 1, wobei der Katalysator durch die folgenden Schritte hergestellt wird, umfassend

a) Mischen einer ionisierenden ionischen Verbindung mit einem neutralen Metallocen; und
b) Zulassen von Kontakt zwichen der ionisierenden ionischen Verbindung und dem neutralen Metallocen, um

ein Ionenpaar herzustellen, bei dem das Metallocenkation als Katalysator wirkt;

wobei das neutrale Metallocen die allgemeine Formel

$$Cp_2MR^*_p$$

aufweist, wobei Cp eine Cyclopentadienyl- oder eine substituierte Cyclopentadienylgruppe ist, wobei jedes Cp gleich oder verschieden ist, R* ein Hydrocarbylradikal ist, wobei R* gleich oder verschieden ist, M Titanium, Zirkonium oder Hafnium ist, p 1 bis 4 ist,
wobei das ionisierende ionische Mittel kein aktives Proton enthält und ein Carbonium-, Oxonium- oder Sulfoniumkation enthält; und
wobei das Anion der ionisierenden ionischen Verbindung mit dem Metallocenkation nicht koordiniert oder nur locker koordiniert ist und mit dem Metallocenkation chemisch nicht reagiert.

**13.** Ein Katalysatorsystem, umfassend :

a) einen Metallocenkatalysator, und
b) ein Aluminiumalkyl,

wobei das Aluminiumalkyl die allgemeine Formel $AlR'_3$ aufweist, wobei R' ein Alkyl mit bis zu 6 Kohlenstoffatomen ist,
wobei der Metallocenkatalysator ein Ionenpaar mit der allgemeinen Formel

$$[Cp_2MR^*_{p-1}]^+[A]^-$$

ist, wobei $[Cp_2MR^*_{p-1}]^+$ein Metallocenkation ist, wobei Cp eine Cyclopentadienyl- oder substituierte Cyclopentadienylgruppe ist, wobei jedes Cp gleich oder verschieden ist, R* ein Kohlenwasserstoffrest ist, wobei R* gleich oder verschieden ist, M Titanium, Zirkonium oder Hafnium ist, p 1 bis 4 ist,
wobei das Metallocen ein aus einer neutralen Metallocenverbindung und einer ionisierenden ionischen Verbindung gebildetes Ionenpaar ist, wobei besagtes Ionenpaar ein Metallocenkation und ein Anion aus der ionisierenden Verbindung umfasst;
wobei die ionisierende ionische Verbindung kein aktives Proton enthält und die Formel [C][A] aufweist, wobei C ein Carbonium-, Oxonium- oder Sulfoniumkation enthält und wobei das Anion mit dem Metallocenkation nicht koordiniert ist oder locker koordiniert ist;
ausschließlich des Katalysatorsystems, wobei

(i) das Alumiumalkyl Trimethylaluminium ist; und
(ii) die neutrale Metallocenverbindung Isopropyliden (cyclopentadienyl-1-fluorenyl) zirkoniumdimethyl ist; und
(iii) die ionische ionisierende Verbindung Triphenylcarbeniumtetrakis(pentafluorphenyl)-boronat ist.

**14.** Katalysatorsystem gemäß Anspruch 13, wobei R* ein Alkyl-, Aryl-, Alkenyl-, Alkylaryl- oder Arylalkylradikal von bis zu 20 Kohlenstoffatomen ist.

**15.** Katalysatorsystem gemäß Anspruch 13, wobei R* ein Alkyl mit bis zu sechs Kohlenstoffatomen oder ein Aryl mit bis zu 10 Kohlenstoffatomen ist.

**16.** Katalysatorsystem gemäß Anspruch 13, wobei das Aluminiumalkyl aus der aus Triethylaluminium und Trimethylaluminium bestehenden Gruppe gewählt ist.

**17.** Katalysatorsystem gemäß Anspruch 16, wobei das Aluminiumalkyl Triethylaluminium ist.

**18.** Katalysatorsystem gemäß Anspruch 13, wobei das neutrale Metallocen aus der aus Ethylenbis(tetrahydroindenyl) zirkoniumdimethyl, Ethylenbis(indenyl)zirkoniumdimethyl, Ethylenbis(indenyl)hafniumdimethyl und Isopropyliden (cyclopentadienyl-1-fluorenyl)zirkoniumdimethyl bestehenden Gruppe gewählt ist.

**19.** Katalysatorsystem gemäß Anspruch 13, wobei das Anion ein Tetrakis(pentafluorphenyl)boratanion ist.

## Revendications

1. Procédé pour la polymérisation d'oléfines comprenant le fait de :

   a) mélanger un alkylaluminium avec une oléfine ;
   b) préparer un catalyseur du type d'un métallocène ;
   c) mélanger le catalyseur avec le mélange alkylaluminium-oléfine ;

   dans lequel l'alkylaluminium répond à la formule générale $AlR'_3$ où R' représente un groupe alkyle contenant jusqu'à six atomes de carbone ;
   dans lequel le catalyseur du type d'un métallocène représente une paire d'ions formée à partir d'un composé de métallocène neutre et d'un composé ionique ionisant et comprend un cation de métallocène et un anion provenant du composé ionique ionisant ;
   dans lequel le composé ionique ionisant ne contient pas un proton actif et répond à la formule générale [C] [A] où [C] contient un cation carbonium, un cation oxonium ou un cation sulfonium et l'anion [A] n'est pas coordonné ou est coordonné seulement de manière lâche au cation de métallocène ; et
   dans lequel le métallocène neutre répond à la formule générale

   $$Cp_2 \ M \ R^*p$$

   où Cp représente un groupe cyclopentadiényle ou un groupe cyclopentadiényle substitué, chaque groupe Cp étant identique ou différent, R* représente un radical hydrocarbyle, les radicaux R* étant identiques ou différents, M représente le titane, le zirconium ou le hafnium, p est égal à 1 - 4 ;
   à l'exclusion du procédé dans lequel

   (i) l'alkylaluminium est le triméthylaluminium ;
   (ii) l'oléfine est le propylène ; et
   (iii) le composé de métallocène neutre est le diméthyl isopropylidène (cyclopentadiényl-1-fluorényl) zirconium ; et
   (iv) le composé ionique ionisant est le tétrakis (pentafluorophényl) borate de triphénylcarbénium.

2. Procédé selon la revendication 1, dans lequel R* représente un groupe alkyle, un groupe aryle, un groupe alcényle, un groupe alkylaryle ou un groupe arylalkyle contenant jusqu'à 20 atomes de carbone.

3. Procédé selon la revendication 1, dans lequel le rapport molaire métallocène : composé ionisant : alkylaluminium se situe dans la plage de 0,5 : 1 : 0,5 à 5 : 1 : 350.

4. Procédé selon la revendication 3, dans lequel le rapport molaire métallocène : composé ionisant : alkylaluminium se situe dans la plage de 0,625 : 1 : 1,5 à 1,5 : 1 : 77.

5. Procédé selon la revendication 4, dans lequel le rapport molaire métallocène : composé ionisant : alkylaluminium se situe dans la plage de 1 : 1 : 1.

6. Procédé selon la revendication 1, dans lequel l'alkylaluminium est choisi parmi le groupe constitué par le triéthylaluminium et le triméthylaluminium.

7. Procédé selon la revendication 6, dans lequel l'alkylaluminium est le triéthylaluminium.

8. Procédé selon la revendication 1, dans lequel l'oléfine est le propylène.

9. Procédé selon la revendication 1, dans lequel M est choisi parmi le groupe constitué par le zirconium et le hafnium.

10. Procédé selon la revendication 1, dans lequel le métallocène neutre est choisi parmi le groupe constitué par le diméthyl éthylènebis(tétrahydroindényl)zirconium, le diméthyl éthylènebis(indényl) zirconium, le diméthyl éthylènebis(indényl) hafnium et le diméthyl isopropylidène(cyclopentadiényl-1-fluorényl) zirconium.

11. Procédé selon la revendication 1, dans lequel le composé ionique ionisant est le tétrakis(pentafluorophényl) borate

de triphénylcarbénium.

**12.** Procédé selon la revendication 1, dans lequel on prépare le catalyseur en passant par les étapes ci-après consistant à :

a) mélanger un composé ionique ionisant avec un métallocène neutre ; et
b) mettre en contact le composé ionique ionisant et le métallocène neutre pour générer une paire d'ions dans laquelle le cation de métallocène fait office de catalyseur

dans lequel le métallocène neutre répond à la formule générale

$$Cp_2\ M\ R^*_p$$

où Cp représente un groupe cyclopentadiényle ou un groupe cyclopentadiényle substitué, chaque groupe Cp étant identique ou différent, R* représente un radical hydrocarbyle, les radicaux R* étant identiques ou différents, M représente le titane, le zirconium ou le hafnium, p est égal à 1 - 4 ;
dans lequel le composé ionique ionisant ne contient pas un proton actif et contient un cation de carbonium, d'oxonium ou de sulfonium, et
dans lequel l'anion du composé ionique ionisant n'est pas coordonné ou est coordonné seulement de manière lâche au cation de métallocène et est chimiquement inerte vis-à-vis du cation de métallocène.

**13.** Système de catalyseur comprenant :

a) un catalyseur à base de métallocène ; et
b) un alkylaluminium

dans lequel l'alkylaluminium répond à la formule générale $AlR'_3$ où R' représente un groupe alkyle contenant jusqu'à 6 atomes de carbone ;
dans lequel le catalyseur du type d'un métallocène représente une paire d'ions répondant à la formule générale

$$[Cp_2\ M\ R^*_{p-1}]^+\ [A]^-$$

où $[Cp_2\ M\ R^*_{p-1}]^+$ représente un cation de métallocène dans lequel Cp représente un groupe cyclopentadiényle ou un groupe cyclopentadiényle substitué, chaque groupe Cp étant identique ou différent, R* représente un radical hydrocarbyle, les radicaux R* étant identiques ou différents, M représente le titane, le zirconium ou le hafnium, p est égal à 1 - 4 ;
dans lequel le métallocène représente une paire d'ions formée à partir d'un composé de métallocène neutre et d'un composé ionique ionisant, ladite paire d'ions comprenant un cation de métallocène et un anion provenant du composé ionique ionisant ;
dans lequel le composé ionique ionisant ne contient pas un proton actif et répond à la formule générale [C][A] où [C] contient un cation carbonium, un cation oxonium ou un cation sulfonium et l'anion [A] n'est pas coordonné ou est coordonné seulement de manière lâche au cation de métallocène ;
à l'exclusion du système de catalyseur dans lequel

(i) l'alkylaluminium est le triméthylaluminium ;
(ii) le composé de métallocène neutre est le diméthyl isopropylidène (cyclopentadiényl-1-fluorényl) zirconium ; et
(iv) le composé ionique ionisant est le tétrakis (pentafluorophényl) borate de triphénylcarbénium.

**14.** Système de catalyseur selon la revendication 13, dans lequel R* représente un groupe alkyle, un groupe aryle, un groupe alcényle, un groupe alkylaryle ou un groupe arylalkyle contenant jusqu'à 20 atomes de carbone.

**15.** Système de catalyseur selon la revendication 13, dans lequel R* représente un groupe alkyle contenant jusqu'à 6 atomes de carbone ou un groupe aryle contenant jusqu'à 10 atomes de carbone

**16.** Système de catalyseur selon la revendication 13, dans lequel l'alkylaluminium est choisi parmi le groupe constitué

par le triéthylaluminium et le triméthylaluminium.

**17.** Système de catalyseur selon la revendication 16, dans lequel l'alkylaluminium est le triéthylaluminium.

**18.** Système de catalyseur selon la revendication 13, dans lequel le métallocène neutre est choisi parmi le groupe constitué par le diméthyl éthylènebis(tétrahydro-indényl)zirconium, le diméthyl éthylènebis(indényl) zirconium, le diméthyl éthylènebis(indényl) hafnium et le diméthyl isopropylidène(cyclopentadiényl-1-fluorényl) zirconium.

**19.** Système de catalyseur selon la revendication 13, dans lequel l'anion est l'anion tétrakis(pentafluorophényl) borate.